# EUROPÄISCHE PATENTSCHRIFT

(11) **EP 0 935 540 B1**
(45) Veröffentlichungstag und Bekanntmachung des Hinweises auf die Patenterteilung: **26.09.2001**
(21) Anmeldenummer: 97945739.7
(22) Anmeldetag: 11.10.1997
(51) Int. Cl.: B60R 16/02

(54) **STEUERGERÄT FÜR EIN BORDNETZ**
CONTROL UNIT FOR THE POWER SUPPLY SYSTEM ON-BOARD
COMMANDE DE RESEAU D'ALIMENTATION ELECTRIQUE DE BORD

(30) Priorität: 07.11.1996 DE 19645944
(43) Veröffentlichungstag der Anmeldung: 18.08.1999
(73) Patentinhaber: ROBERT BOSCH GMBH, 70442 Stuttgart (DE)
(72) Erfinder: FREY, Wunibald, D-71701 Schwieberdingen (DE); KOELLE, Gerhard, D-75446 Wiernsheim (DE); GEIGER, Albert, D-71735 Eberdingen (DE)
(86) Internationale Anmeldenummer: DE9702332
(87) Internationale Veröffentlichungsnummer: WO9819890

(56) Entgegenhaltungen:
- EP-A- 0 583 630
- EP-A- 0 660 488
- WO-A-79/00617
- DE-A- 4 028 242
- GB-A- 2 136 224
- US-A- 5 488 283

## Beschreibung

Die Erfindung geht aus von einem Steuergerät für ein Bordnetz, insbesonders ein Fahrzeugbordnetz mit wenigstens zwei von einem Generator aufladbaren Batterien, nach der Gattung des Hauptanspruchs.

### Stand der Technik

Die Spannungsversorgung in einem Kraftfahrzeug mit einer Vielzahl von elektrischen Verbrauchern läßt sich mit Hilfe einer Batterie teilweise nicht mehr bewerkstelligen, so daß Fahrzeugbordnetze zunehmend mit zwei getrennten Batterien ausgestattet werden, die über geeignete elektronische Schaltungen miteinander verbindbar sind. Ein solches Fahrzeugbordnetz ist beispielsweise aus der DE-PS 41 38 943 bekannt.

Bei diesem bekannten Fahrzeugbordnetz ist eine erste Batterie überwiegend zur Versorgung des Starters vorgesehen, während die zweite Batterie zur Versorgung der übrigen Verbraucher dient. Die beiden Batterien können mit Hilfe eines sogenannten Lade-/Trennmoduls miteinander verbunden oder voneinander getrennt werden, wobei die Verbindung in Abhängigkeit von vorgebbaren Bedingungen vom Lade/Trennmodul geöffnet oder geschlossen wird. Die Spannungsversorgung für das Lade-/Trennmodul erfolgt aus den beiden Batterien.

### Vorteile der Erfindung

Das erfindungsgemäße Steuergerät für ein Bordnetz mit den Merkmalen des Anspruchs 1 hat den Vorteil, daß es kontinuierlich mit den zur Versorgung dienenden Batterien in Verbindung steht, wobei die Stromaufnahme in deaktiviertem Zustand minimal ist und nach Betätigung des Zündschalters eine sehr schnelle und einfache Aktivierung des Steuergerätes erfolgen kann.

Erzielt wird dieser Vorteil, indem das Steuergerät über ein Versorgungsnetzteil, das wenigstens einen Feldeffekttransistor umfaßt und über je eine Diode mit den Batterien in Verbindung steht und der Feldeffekttransistor während des Betriebes des Steuergerätes über ein zugeführtes Signal durchgeschaltet wird, so daß das Steuergerät dann direkt mit den Batterien in Verbindung steht, während im ausgeschalteten Zustand der Feldeffekttransistor gesperrt bleibt und das Steuergerät in einer Art "Sleep-Modus" betrieben wird, in dem es nur eine sehr geringe Stromaufnahme aufweist.

Weitere Vorteile der Erfindung werden durch die in den Unteransprüchen angegebenen Maßnahmen erzielt. Dabei ist besonders vorteilhaft, daß mit Hilfe des erfindungsgemäßen Steuergerätes eine sehr variable Ausgestaltung der Bordnetzstruktur möglich ist. Bei Verwendung eines busfähigen Mikrocomputers im Steuergerät läßt sich ein Informationsaustausch zum Bordnetz realisieren. Dieser Informationsaustausch kann sich in vorteilhafter Weise auch auf den Informationsaustausch mit dem eigentlichen Steuergerät der Brennkraftmaschine erstrecken, so daß bei der Spannungsregelung Betriebsbedingungen der Brennkraftmaschine mitberücksichtigt werden können, beispielsweise Drehzahl, Leerlaufdrehzahl oder Last. Gleichzeitig kann das Steuergerät, das die Brennkraftmaschine regelt, generator- oder bordnetztypische Größen mitberücksichtigen.

Weiterhin ist vorteilhaft, daß bei der Generatorregelung die Temperatur der Batterien mitberücksichtigt werden kann, wobei-sich diese Temperatur in vorteilhafter Weise mittels einer_Beobachterfunktion aus einfach meßbaren Größen ermitteln läßt. Die Beeinflussung beider Ladespannungen ist somit durch das Bordnetzsteuergerät möglich.

Die Parallelschaltung der beiden Batterien erfolgt in vorteilhafter Weise mittels Halbleiterschalter, wobei Power-MOSFET's besonders geeignet sind.

Die für den Starter vorgesehene Batterie wird in vorteilhafter Weise bedarfsgerecht über einen Gleichspannungswandler von der Bordnetzseite her versorgt. Unterschreitet das Spannungsniveau einer der beiden Batterien einen vorgebbaren Wert, läßt sich ein Notbetrieb durchführen, bei dem die Starterbatterie aus der anderen Batterie über einen Gleichspannungswandler soweit geladen werden kann, daß ein Neustart gewährleistet ist. Durch Einsatz eines auf der Bordnetzseite befindlichen Fehlerspeichers können Notbetriebsinformationen abgespeichert werden, die beim Neustart oder beim nächsten Werkstattbesuch angezeigt werden und der Betriebszustand des Steuergerätes falls erforderlich in den Ruhemodus ("Sleep-Modus")zurückgesetzt werden.

### Zeichnung

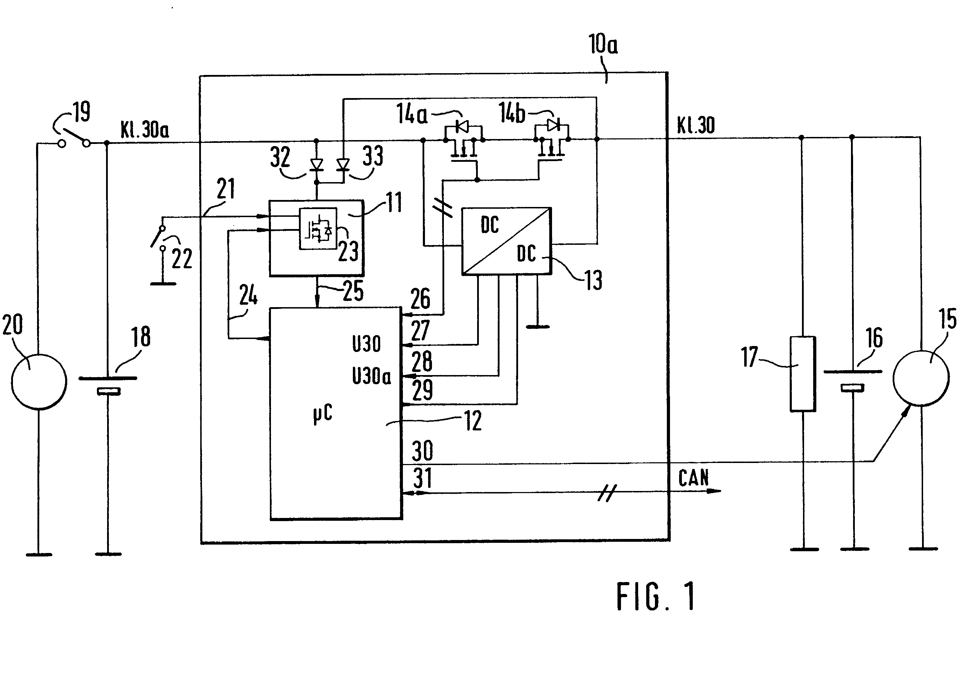

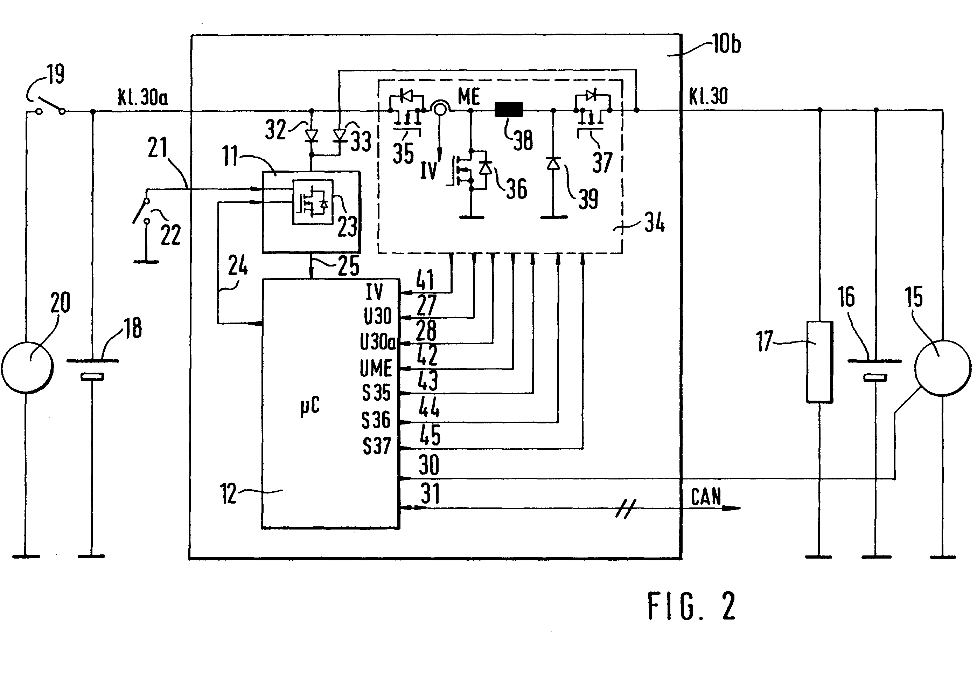

Zwei Ausführungsbeispiele der Erfindung sind in den Figuren 1 und 2 der Zeichnung dargestellt und werden in der nachfolgenden Beschreibung näher erläutert.

### Beschreibung

In Figur 1 ist die Ausgestaltung eines Bordnetzsteuergerätes für ein Zwei-Batterien-Bordnetz dargestellt, das die Bordnetzenergieversorgung auch bei leerer Bordnetzbatterie sicherstellt sowie eine optimale und schonende Ladung beider Batterien gewährleistet.

Im einzelnen besteht das Bordnetz-Steuergerät 10a aus einem Versorgungsnetzteil 11, einer Steuer- und Regeleinheit 12, die z.B. als busfähiger Mikrocomputer ausgestaltet ist, einem Gleichspannungswandler 13 und einer kurzschlußsicheren Endstufe 14a, 14b. Das Bordnetzsteuergerät 10a ist mit seinen leistungsseitigen Eingängen an die Klemmen Kl. 30 und Kl. 30a angeschlossen. An die Klemme Kl. 30 ist in üblicher Weise der Generator 15, die Batterie 16, die die Versorgungsbatterie für das Bordnetz (Bordnetzbatterie) darstellt sowie die Last 17 angeschlossen. Die Last 17 ist dabei stellvertretend für die Vielzahl der Bordnetzverbraucher angegeben, wobei die Verbraucher jeweils über nicht dargestellte Schalter zugeschaltet werden können.

An die Klemme Kl. 30a ist die Batterie 18 angeschlossen, die als Starterbatterie ausgestaltet ist und bei geschlossenem Schalter 19 zur Versorgung des Starters 20 dient.

Das Steuergerät 10a sowie die Steuer- und Regeleinheit 12 weisen eine Anzahl von Ein- bzw. Ausgängen auf, die die Verbindung zu den einzelnen Komponenten des Bordnetzsteuergerätes bzw. zum übrigen Bordnetz herstellen. Einer dieser Eingänge ist mit 21 bezeichnet, er dient der Initialisierung und führt vom Versorgungsnetzteil 11 auf den Schalter 22. Wird dieser Schalter 22 geschlossen, wird der Feldeffekttransistor 23 des Versorgungsnetzteiles 11 durchgeschaltet. Über eine Verbindung 24 zwischen dem Versorgungsnetzteil 11 und der Steuer- und Regeleinheit 12 kann der Feldeffekttransistor 23 auch von der Steuer- und Regeleinheit 12 initialisiert werden. Die Spannungsversorgung der Steuer- und Regeleinheit 12 aus dem Versorgungsnetzteil 11 erfolgt über die Verbindung 25.

Die Steuer- und Regeleinheit 12, bzw. der zugehörige Mikrocomputer weist weitere Anschlüsse 26, 27, 28, 29, 30 und 31 auf, über die Informationen bezüglich des Schaltzustandes der Endstufen 14, bezüglich der an den Klemmen Kl. 30 und Kl. 30a herrschenden Spannungen U30 und U30a zugeführt werden können. Über den Anschluß 29 können Steuersignale an den Gleichspannungswandler 13 abgesetzt werden. Über den Anschluß 30 ist eine Beeinflussung des Generators 50 möglich und Anschluß 31 stellt einen bidirektionalen Anschluß für einen Bus, beispielsweise einen CAN-Bus bzw. einen Karosseriebus. Über diese Anschlüsse können Daten oder Steuersignale ausgetauscht werden, die eine Generatorregelung unter Berücksichtigung von Betriebsbedingungen der Brennkraftmaschine und eine Brennkrftmaschinenregelung unter Berücksichtigung von Bordnetzbedingungen ermöglichen.

Die Funktion des Ausführungsbeispieles nach Figur 1 läßt sich wie folgt erläutern:

### 1. Funktionen im Normalfall

Das Netzteil 11 des Steuergerätes 10 liegt über die beiden Dioden 32, 33, deren Anode jeweils an die Klemme Kl. 30 bzw. Kl. 30a angeschlossen ist, ohne weiteren Zwischenschalter über den Feldeffekttransistor 23 an beiden Batterien. Das Bordnetzsteuergerät 10 befindet sich in diesem Zustand in einem "Sleep-Modus". In diesem Betriebszustand beträgt die Stromaufnahme nur wenige *µ* Ampère und liegt damit unter dem Bereich der Batterieselbstentladung. Die Dauerstromaufnahme ist somit vernachlässigbar klein.

Über einen mechanischen Kontakt, beispielsweise im Zündschloß nach Masse oder nach Klemme Kl. 30a, symbolisiert durch den Schalter 22, wird der Feldeffekttransistor 23 des Versorgungsnetzteiles 11 durchgeschaltet und die Gesamtversorgung des Bordnetzsteuergerätes 10a aktiviert. Nach dem Hochbuten des Mikrocomputers der Steuer- und Regeleinrichtung 12 wird vom Mikrocomputer zuerst die Spannungslage auf der Bordnetzseite, also an Klemme Kl. 30 überprüft. Dazu wird der Steuer- und Regeleinrichtung über den Eingang die Spannung U30 zugeführt. Liegen diese Spannungen oberhalb eines programmierbaren Wertes von beispielsweise 11,8 V, so bleiben beide Batteriekreise getrennt. Das Bordnetzsteuergerät 10a wartet dann auf die Information, daß der Start erfolgt ist. Kommt diese Information nicht innerhalb einer vorgebbaren Zeit von beispielsweise 30 sec, wird die Gesamtstromversorgung deaktiviert. Der Feldeffekttransistor 23 im Versorgungsnetzteil 11 wird dabei durch Ansteuerung vom Mikrocomputer in gesperrtem Zustand umgeschaltet und das Bordnetzsteuergerät 10a geht in den "Sleep-Modus" zurück.

Ein erneutes Aktivieren des Bordnetzsteuergerätes ist danach nur durch erneutes Betätigen des mechanischen Schalters 22 möglich, beispielsweise indem der Zündschlüssel herausgenommen und wieder eingesteckt wird.

Nach einem erfolgreichen Start des Motors werden die für eine optimale Spannungsregelung erforderlichen Größen unter Ausnutzung der von einzelnen Sensoren gelieferten oder im Motorsteuergerät ohnehin vorhandenen Informationen ermittelt. In einem Bordnetzsystem, das über ein Karosseriebussystem verfügt, wird dieser Karosseriebus auch an den Mikrocomputer des Bordnetzsteuergerätes angeschlossen. Aus den über den Karosseriebus zuführbaren Informationen bezüglich der Außentemperatur, der Kühlwassertemperatur oder der Motortemperatur sowie der Innenraumtemperatur lassen sich durch geschickte Verknüpfungen die Temperaturen der beiden Batterien ermitteln, ohne daß diese Temperaturen selbst gemessen werden müßten. Da die Batterietemperatur für die Spannungsregelung eine wesentliche Größe ist, sollte sie bei der Festlegung der Sollspannung berücksichtigt werden. Die Vorgabe der temperaturabhängigen Ladespannung für die Bordnetzbatterie 16 erfolgt dann über eine Sollwertvorgabe, die dem Generatorregler zugeführt wird.

Damit die gegenüber höheren Spannungen empfindlichen Verbraucher geschützt werden, sollten in Bordnetzen, in denen für einzelne Verbraucher unterschiedliche Spannungen zur Verfügung gestellt werden, elektronische Schalter, DC/DC-Wandler usw. eingesetzt werden, die beispielsweise die Lampen schützen. Diese elektronischen Schalter bzw. DC/DC-Wandler werden vorteilhafterweise an verschiedenen Stellen des Bordnetzes eingesetzt, so daß die jeweils dahinterliegenden Verbraucher geschützt sind.

Die für die Starterversorgung vorgesehene Batterie 18 kann bedarfsgerecht über einen DC/DC-Wandler von der Bordnetzseite her so versorgt werden, daß temperaturangepaßt sowohl ein höheres als auch ein niedrigeres oder das selbe Ladespannungsniveau im Vergleich zur Bordnetzspannung realisiert werden kann. Der Einsatz eines geeigneten Spannungswandlers ermöglicht im übrigen auch noch eine Ladung der Starterbatterie, wenn die Bordnetzbatterie relativ stark entladen ist. Als Starterbatterie wird eine Batterie eingesetzt, deren Kenndaten speziell an die Erfordernisse, beispielsweise Bereitstellung eines kurzzeitigen hohen Stromes angepaßt ist.

### 2. Funktion im Notbetrieb

Mit dem Ausführungsbeispiel nach Figur 1 läßt sich in dem Fall, in dem die Bordnetzspannung zu weit abgesunken ist, noch ein Notbetrieb bewerkstelligen. Wird nach der Initialisierungsphase und Abfrage der Bordnetzspannung erkannt, daß diese ein minimales vorgegebenes Spannungsniveau unterschreitet, wird der Notbetrieb ausgelöst. Dazu werden beim Unterschreiten des vorgegebenen Spannungsniveaus beide Batterien 16 und 18 vom Bordnetzsteuergerät parallelgeschaltet und somit wird das Bordnetz aus der Starterbatterie 16 mitversorgt. Gleichzeitig erfolgt die Übermittlung einer Notbetriebsinformation, so daß die Verbraucher über deren vorgeschaltete elektronische Schalter gegebenenfalls abgeschaltet werden können, wobei berücksichtigt wird, daß nur solche Verbraucher abgeschaltet werden, die nicht funktions- bzw. sicherheitsrelevant sind. Zusätzlich kann dabei ein auf der Bordnetzseite befindlicher Fehlerspeicher gesetzt werden oder es kann eine Anzeige ausgelöst werden.

Auch im Notbetrieb wird die Spannungsversorgung für das Bordnetzsteuergerät 10a unterbrochen, wenn innerhalb der vorgebbaren Zeit kein Start erfolgt ist. Es werden dann die Batterien 16, 18 wieder getrennt und das Steuergerät 10 geht in den Ruhemodus über, bis durch Schließen des mechanischen Schalters 22 eine neue Einschaltanforderung ausgelöst wird.

Erfolgt im Notbetrieb ein Start des Motors, nimmt der Generator 15 in üblicher Weise seine Arbeit auf und die Bordnetzspannung steigt nach einer relativ kurzen Zeit aufgrund des vom Generator gelieferten Stromes an. Erreicht die Bordnetzspannung die festgelegte Schwelle, wir die Parallelschaltung der beiden Batterien wieder aufgehoben, wobei der dazu erforderliche Ansteuerimpuls von der Steuer- und Regeleinrichtung 12 ausgelöst wird. Nach Öffnen der Verbindung zwischen den beiden Batterien 16 und 18 werden diese gemäß dem unter Punkt 1 beschriebenen Verfahren geladen, wobei die Batterie 18 zur Versorgung des Starters 20 Ladepriorität erhält, damit auch nach einem kurzzeitigen Fahrbetrieb für einen nachfolgenden Start wieder genügend Energie zur Verfügung steht.

In Figur 2 ist ein zweites Ausführungsbeispiel der Erfindung dargestellt, bei dem die kurzschlußsichere Endstufe und der Spannungswandler gemäß dem Ausführungsbeispiel nach Figur 1 durch ein Leistungsteil mit Wandler 34 ersetzt ist. Dieses Leistungsteil mit Wandler besteht aus den Feldeffekttransistoren 35, 36 und 37, der Induktivität 38, die als Drossel wirkt, sowie der Freilaufdiode 39. Zwischen dem Leistungsteil mit Wandler 34 und dem Mikrocomputer des Steuer- und Regelteils 12 sind verschiedene Verbindungen vorhanden, die teilweise den Verbindungen gemäß dem Ausführungsbeispiel nach Figur 1 entsprechen. Gleiche Bauteile weisen die aus Fig. 1 bekannten Bezeichnungen auf. Zusätzliche Verbindungen bzw. Anschlüsse 41, 42, 43, 44, 45 sind vorhanden, über die der Steuer- und Regeleinrichtung 12 Informationen bezüglich des Versorgungsstroms IV und der Spannung UME zugeführt werden. Der Versorgungsstrom IV wird zwischen dem Transistor 35 und der Induktivität 38 gemessen, die Spannung UME am Punkt ME. Ansteuersignale S35, S36, S37 an die Transistoren 35, 36 und 37 werden über die Verbindungen bzw. Anschlüsse 43, 44 und 45 abgegeben.

Das in Figur 2 dargestellte Bordnetzsteuergerät 10b funktioniert im Normalbetrieb grundsätzlich nach dem gleichen Prinzip wie das Bordnetzsteuergerät 10a nach Figur 1. Die Funktionsweise des Bordnetzsteuergerätes nach Figur 2 im Notbetrieb läßt sich wie folgt beschreiben:
Führt die Auswertung der Bordnetzspannung nach der Initialisierungsphase zu dem Ergebnis, daß sie kleiner ist als ein vorgebbarer Minimalwert, schaltet das Bordnetzsteuergerät 10a die beiden Batterien 16 und 18 parallel und das Bordnetz wird über die Starterbatterie 18 mitversorgt. In diesem Fall ist der Transistor 35 und der Transistor 37 leitend, während der Transistor 36 gesperrt ist. Übersteigt die Bordnetzspannung nach Anlaufen des Motors und damit nach Stromabgabe durch den Generator 15 das vorgegebene Spannungsniveau, wird auf Normalbetrieb umgeschaltet mit einer Spannungserhöhung, die bewirkt, daß die Spannung U30a größer ist als U30. Es wird dann der Transistor 37 leitend geschaltet, die Transistoren 35 und 36 takten dann im Gegentaktbetrieb. Bei einer Spannungserniedrigung, bei der die Spannung U30a kleiner ist als die Spannung U30 wird der Transistor 37 getaktet betrieben. Der Transistor 36 sperrt und der Transistor 35 wird eingeschaltet.

Da das Ausführungsbeispiel nach Figur 2 mit einer in Serie geschalteten Drossel ausgestattet ist, die den Stromanstieg verzögert, ist kein zusätzlicher Überlastschutz im Leistungsteil mit Wandler nötig. Der Stromanstieg wird durch die Drossel 30 soweit verzögert, daß der Mikrocomputer der Steuer- und Regeleinrichtung 12 innerhalb seiner Taktzeit reagieren kann und somit einen Überlastschutz gewährleisten kann. Die Strommessung kann durch eine direkte Stromerfassung über einen Shunt oder über eine Auswertung des Spannungsverlaufs von UDS oder über ein zeitlich begrenztes Einschalten des jeweiligen Feldeffekttransistors 35 oder 37 und Beobachtung der Spannung an der Klemme Kl. 30 bzw. Kl. 30a erfolgen. Der Transistor 37 kann gleichzeitig als Schalter für den Gleichspannungswandler dienen, so daß als DC/DC-Wandler ein Hoch-Tiefsetzsteller erhalten wird und zur Parallelschaltung der beiden Batterien 16, 18 verwendet wird.

Die beiden Ausführungsbeispiele der Erfindung wurden für ein Fahrzeugbordnetz ausgewählt. Grundsätzlich läßt sich ein erfindungsgemäßes Bordnetzsteuergerät auch in anderen Zweibatterie-Versorgungssystemen einsetzen. Auch eine Erweiterung auf mehr als zwei Batterien ist grundsätzlich möglich.

## Patentansprüche

1. Steuergerät (10a, 10b) für ein Bordnetz mit wenigstens zwei von einem Generator (50) aufladbaren Batterien, (16, 18) die zur Versorgung erster und zweiter Verbraucher (17) dienen und über das Steuergerät (10a, 10b) miteinander in Verbindung stehen, wobei die Verbindung der beiden Batterien (16, 18) nur bei vorgebbaren Bedingungen erfolgt, **dadurch gekennzeichnet, daß** das Steuergerät (10a, 10b) ein Versorgungsnetzteil (11) mit wenigstens einem Feldeffekttransistor (23) umfaßt und über Mittel zur Spannungsbegrenzung (32, 33) mit den Batterien (16, 18) in Verbindung steht und der Feldeffekttransistor (23) zur Inbetriebnahme des Steuergerätes (10a, 10b) durch Zuführung eines Signales durchgeschaltet wird.

2. Steuergerät für ein Bordnetz nach Anspruch 1, **dadurch gekennzeichnet, daß** eine Steuer- und Regeleinheit (12), die einen Mikrocomputer umfaßt, als Bestandteil des Steuergerätes (10a, 10b) vorhanden ist und die Steuer- und Regelvorgänge auslöst.

3. Steuergerät für ein Bordnetz nach Anspruch 2, **dadurch gekennzeichnet, daß** der Steuer- und Regeleinheit (12) über Eingänge Informationen zugeführt werden und die Steuer- und Regeleinheit (12) in Abhängigkeit von diesen Informationen Ansteuersignale ermittelt, die über Verbindungen an einzelne Komponenten des Steuergerätes und/oder des Bordnetzes abgegeben werden.

4. Steuergerät für ein Bordnetz nach einem der vorhergehenen Ansprüche, **dadurch gekennzeichnet, daß** ein von der Steuer- und Regeleinheit ansteuerbarer Gleichspannungswandler in Serie zwischen die beiden Batterien (16) und (18) schaltbar ist.

5. Steuergerät für ein Bordnetz nach einem der vorhergehenden Ansprüche, **dadurch gekennzeichnet, daß** ein Leistungsteil mit Wandler vorhanden ist, das in der Verbindung zwischen den beiden Batterien (16) und (18) liegt, das Daten an die Steuereinheit (12) abgibt und von dieser Ansteuersignale empfängt.

6. Steuergerät nach Anspruch 5, **dadurch gekennzeichnet, daß** das Leistungsteil mit Wandler eine Serienschaltung aus erstern Transistor (35), Drossel (38) und zweitern Transistor (37) umfaßt, wobei zwischen je einem Anschluß der Drossel (38) und Masse ein weiterer Transistor (36) bzw. eine Diode (39) liegt.

## Claims

1. Control device (10a, 10b) for a vehicle's electrical system having at least two batteries (16, 18) which can be charged by a generator (50) and which are used to supply first and second loads (17) and which are connected to one another via the control device (10a, 10b), the two batteries (16, 18) being connected only under predefinable conditions, **characterized in that** the control device (10a, 10b) comprises a power supply unit (11) having at least one field-effect transistor (23) and is connected to the batteries (16, 18) via voltage-limiting means (32, 33), and the field-effect transistor (23) is connected through by feeding in a signal in order to activate the control device (10a, 10b).

2. Control device for a vehicle's electrical system according to Claim 1, **characterized in that** an open-loop and closed-loop control unit (12), which comprises a microcomputer, is provided as a component of the control device (10a, 10b) and triggers the open-loop and closed-loop control processes.

3. Control device for a vehicle's electrical system according to Claim 2, **characterized in that** information is fed to the open-loop and closed-loop control unit (12) via inputs, and the open-loop and closed-loop control unit (12) determines, as a function of this information, actuation signals which are output to individual components of the control device and/or of the vehicle's electrical system via connections.

4. Control device for a vehicle's electrical system according to one of the preceding claims, **characterized in that** a d.c. voltage converter which can be actuated by the open-loop and closed-loop control unit can be connected in series between the two batteries (16) and (18).

5. Control device for a vehicle's electrical system according to one of the preceding claims, **characterized in that** a power unit with converter is provided, which power unit is located in the connection between the two batteries (16) and (18) and outputs data to the control unit (12) and receives actuation signals from it.

6. Control device according to Claim 5, **characterized in that** the power unit with converter comprises a series circuit composed of a first transistor (35), inductor (38) and second transistor (37), a further transistor (36) and a diode (39) being respectively located between each terminal of the inductor (38) and ground.

## Revendications

1. Appareil de commande (10a, 10b) d'un réseau embarqué ayant au moins deux batteries (16, 18) rechargeable à partir d'un générateur (50), ces batteries alimentant des premier et second consommateurs (17) et étant reliées l'une à l'autre par l'intermédiaire de l'appareil de commande (10a, 10b), la liaison entre les deux batteries (16, 18) ne se faisant que dans des conditions prédéterminées,
**caractérisé en ce que**
l'appareil de commande (10a, 10b) comprend une partie de réseau d'alimentation (11) avec au moins un transistor à effet de champ (23), et est relié par des moyens de limitation de tension (32, 33) aux batteries (16, 18), le transistor à effet de champ (23) étant débloqué par l'envoi d'un signal pour la mise en route de l'appareil de commande (10a, 10b).

2. Appareil de commande d'un réseau embarqué selon la revendication 1,
**caractérisé en ce que**
l'unité de commande et de régulation (12) qui comprend un micro-ordinateur, fait partie de l'appareil de commande (10a, 10b) et déclenche les opérations de commande et de régulation.

3. Appareil de commande selon la revendication 2,
**caractérisé en ce que**
l'unité de commande et de régulation (12) reçoit des informations par l'intermédiaire d'entrées, et cette unité (12) détermine des signaux de commande en fonction de ces informations, signaux de commande qui sont fournis par l'intermédiaire de composants de l'appareil de commande et/ou du réseau embarqué.

4. Système de commande selon l'une quelconque des revendications précédentes,
**caractérisé par**
un transformateur de tension continue commandé par l'unité de commande et de régulation, ce transformateur étant branché en série entre les deux batteries (16, 18) de manière à pouvoir commuter.

5. Système de commande selon l'une quelconque des revendications précédentes,
**caractérisé en ce qu'**
une partie de puissance est reliée au convertisseur qui est situé dans la liaison entre les deux batteries (16, 18), en fournissant les données à l'unité de commande (12) et en recevant les impulsions de ces signaux de commande.

6. Système de commande selon la revendication 5,
**caractérisé en ce que**
la partie de puissance avec transformateur comprend le montage en série formé d'un premier transistor (35), de la bobine d'étranglement (38) et d'un second transistor (37), et entre chaque branchement de la bobine (38) et de la masse, on a un autre transistor (36) ou une diode (39).
